# EUROPEAN PATENT SPECIFICATION

(11) **EP 4 482 285 B1**
(45) Date of publication and mention of the grant of the patent: **25.02.2026**
(21) Application number: 22927081.4
(22) Date of filing: 17.02.2022
(51) Int. Cl.: G06N 10/00, G06F 1/12, G06N 10/20

(54) **INFORMATION PROCESSING DEVICE, FREQUENCY ADJUSTMENT METHOD, AND FREQUENCY ADJUSTMENT PROGRAM**
INFORMATIONSVERARBEITUNGSVORRICHTUNG, FREQUENZEINSTELLUNGSVERFAHREN UND FREQUENZEINSTELLUNGSPROGRAMM
DISPOSITIF DE TRAITEMENT D'INFORMATIONS, PROCÉDÉ DE RÉGLAGE DE FRÉQUENCE ET PROGRAMME DE RÉGLAGE DE FRÉQUENCE

(43) Date of publication of application: 25.12.2024
(73) Proprietor: FUJITSU LIMITED, Kawasaki-shi, Kanagawa 211-8588 (JP)
(72) Inventor: KAWASHITA, Mitsuya, Kawasaki-shi, Kanagawa 211-8588 (JP)
(74) Representative: Haseltine Lake Kempner LLP
(86) International application number: PCT/JP2022/006386
(87) International publication number: WO 2023/157179

(56) References cited:
- JP-A- 2007 049 009
- US-A1- 2020 074 344
- US-A1- 2020 310 908
- US-A1- 2020 394 548

## Description

### FIELD

The present disclosure relates to an information processing apparatus, a frequency adjustment method, and a frequency adjustment program.

### BACKGROUND

A quantum bit device to be used in a quantum computer using a superconducting circuit including a Josephson junction has been commonly known. The quantum bit device includes a quantum bit placed in a dilution refrigerator, a control line that controls a state of the quantum bit, and a quantum bit control unit that generates microwaves to be transmitted to the control line (e.g., see Patent Document 1).

### SUMMARY

### TECHNICAL PROBLEM

However, when digital signals are generated in the quantum computer, harmonic noise generated by the digital signals may be superimposed on the microwaves.

The present disclosure provides an information processing apparatus, a frequency adjustment method, and a frequency adjustment program capable of reducing harmonic noise superimposed on microwaves.

### SOLUTION TO PROBLEM

The present invention is defined by the independent claims, to which reference should now be made. Specific embodiments are defined in the dependent claims. In one aspect of the present disclosure, there is provided an information processing apparatus according to claim 1.

### ADVANTAGEOUS EFFECTS OF INVENTION

According to the present disclosure, harmonic noise superimposed on microwaves may be reduced.

### BRIEF DESCRIPTION OF DRAWINGS

FIG. 1 is a diagram illustrating an exemplary configuration of an information processing system including an information processing apparatus according to an embodiment.
FIG. 2 is a diagram illustrating a specific exemplary configuration of the information processing system including the information processing apparatus according to the embodiment.
FIG. 3 is a hardware configuration diagram of a computer.
FIG. 4 is a flowchart illustrating a first example of a frequency adjustment method.
FIG. 5 is a flowchart illustrating a second example of the frequency adjustment method.

### DESCRIPTION OF EMBODIMENTS

Hereinafter, an embodiment will be described.

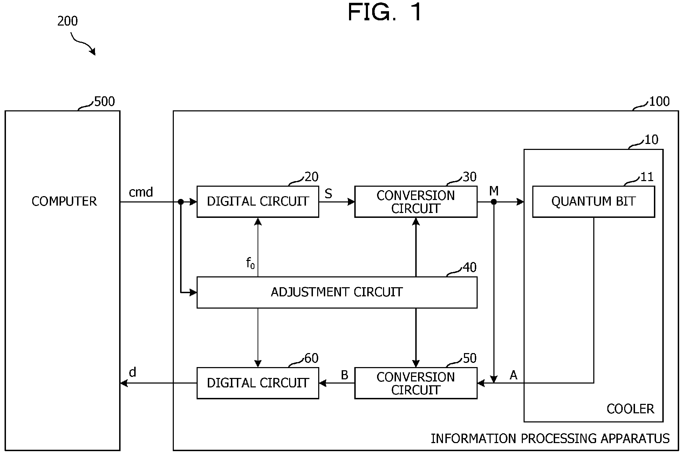

FIG. 1 is a diagram illustrating an exemplary configuration of an information processing system including an information processing apparatus according to an embodiment. An information processing system 200 illustrated in FIG. 1 is a system that processes information using a computer 500. The information processing system 200 includes an information processing apparatus 100 and the computer 500. The information processing apparatus 100 is coupled to the computer 500 by wire or wirelessly.

The information processing apparatus 100 processes information using a quantum bit 11 in accordance with a command cmd input from the computer 500. The information processing apparatus 100 is also called a quantum computer. The information processing apparatus 100 exemplified in FIG. 1 includes a cooler 10, a digital circuit 20, a conversion circuit 30, an adjustment circuit 40, a conversion circuit 50, and a digital circuit 60.

The cooler 10 cools the quantum bit 11. The cooler 10 is, for example, a dilution refrigerator that uses heat of dilution generated when liquid helium-3 is diluted into liquid helium-4. The cooler 10 may be a device that cools the quantum bit 11 by another cooling method.

The quantum bit 11 puts information on a quantum-mechanical two-state system. The quantum bit is also called a qubit. The quantum bit 11 is, for example, a superconducting quantum bit formed by a superconducting circuit including a superconducting Josephson junction. The type of the quantum bit 11 is not limited to this. The number of the quantum bits 11 is at least one or more.

The digital circuit 20 generates digital signals S. The digital circuit 20 generates the digital signals S corresponding to the content of the command cmd in accordance with the command cmd supplied from the computer 500, for example.

The conversion circuit 30 converts the digital signals S generated by the digital circuit 20 into microwaves M to be transmitted to the cooler 10. A frequency of the microwaves M is higher than a frequency (use frequency f₀) used in the digital circuit 20. The use frequency f₀ is an example of a first frequency of a clock used in the digital circuit. The frequency of the microwaves M is an example of a second frequency of the microwaves transmitted to the quantum bit or the cooler.

The adjustment circuit 40 has a function of adjusting the frequency of the microwaves M to a predetermined frequency F (e.g., resonance frequency of the quantum bit 11), and a function of multiplying the clock of the frequency f₀ used in the digital circuit 20. Here, the adjustment circuit 40 has a function of performing adjustment such that an integral multiple of the frequency f₀ (frequency of harmonics) differs from the predetermined frequency F. Therefore, harmonics having a frequency obtained by multiplying the use frequency f₀ do not appear at the frequency (predetermined frequency F) of the microwave M, whereby a malfunction of the cooler 10 (in particular, quantum bit 11) due to noise of the harmonics may be reduced.

For example, the adjustment circuit 40 adjusts the use frequency f₀ such that the multiplication of the use frequency f₀ differs from the predetermined frequency F. When the digital circuit 20 is operated at 500 MHz (when the use frequency f₀ is 500 MHz) in the case where the predetermined frequency F is set to 10.00 GHz, for example, harmonics multiplied by a factor of 20 appear at 10.00 GHz as harmonic noise. The adjustment circuit 40 adjusts the operation frequency of the digital circuit 20 to 490 MHz (adjusts the use frequency f₀ to 490 MHz), whereby the frequency of the harmonics shifts to 9.80 GHz (= 490 MHz × 20). Thus, the harmonic noise obtained by multiplying the use frequency f₀ by a factor of 20 does not appear at 10.00 GHz.

The quantum computer performs control using weak power of equal to or lower than -100 dBm. However, in the digital circuit that generates digital signals, there is large noise such as digital noise. Thus, a scheme is considered in which an S component is increased to increase a signal-to-noise ratio (SNR), and then the entire signals are attenuated using an attenuator (ATT). However, according to this scheme, the power of the S component increases, whereby power consumption may increase. In addition, resolving power of lower bits of a digital-to-analog (DA) converter for converting digital signals into analog signals is wasted, and accordingly, a dynamic range may be narrowed.

Furthermore, one of factors of the noise generated by the digital circuit is clock signals. In the quantum computer, there may be a plurality of "bands in which the harmonics are not desired to be applied (e.g., resonance frequency of the quantum bit, etc.)", and they may deviate from a design value. Thus, it is difficult to calculate the frequency of the clock signals in advance at the time of designing such that the frequency of the harmonics of the clock signals is out of the "bands in which the harmonics are not desired to be applied". Furthermore, when a filter for removing the harmonics of the clock signals and the digital signals is used or the accuracy of the clock signals is lowered, the quality of the microwaves transmitted to the cooler may be lowered.

In view of those problems, the adjustment circuit 40 performs adjustment such that the multiplication of the use frequency f₀ differs from the microwaves M in the present embodiment. As a result, the factors of generating the harmonic noise superimposed on the microwaves M are reduced or removed, whereby the harmonic noise superimposed on the microwaves M may be reduced.

The conversion circuit 50 converts an analog output signal A output from the cooler 10 into a digital output signal B. The output signal B is a digital signal representing a read result of a state of the quantum bit 11.

The digital circuit 60 performs predetermined processing on the digital output signal B from the conversion circuit 50, and outputs it to the computer 500 as read data d.

In a case where the microwaves M are signals to be used to control the state of the quantum bit 11 or signals to be used to read the state of the quantum bit 11, the state of the quantum bit 11 may be read from the quantum bit 11 when the frequency of the microwaves M matches the resonance frequency of the quantum bit 11. The adjustment circuit 40 adjusts the frequency of the microwaves M to the resonance frequency of the quantum bit 11 so that the state of the quantum bit 11 is read from the output signal A transmitted from the quantum bit 11 or the cooler 10 (e.g., as read from the output signal B or digital data d). As a result, the read data d representing the read result of the state of the quantum bit 11 may be supplied to the computer 500, and the computer 500 is enabled to obtain the read data d from the digital circuit 60.

The resonance frequency of the quantum bit 11 may drift every manufacturing variation of the quantum bit 11 or every activation of the quantum bit 11. The adjustment circuit 40 may observe the output signal A for each activation of the quantum bit 11, and may adjust the frequency of the microwaves M to the resonance frequency of the quantum bit 11 for each activation of the quantum bit 11 so that the state of the quantum bit 11 is read from the output signal A. As a result, even if the resonance frequency of the quantum bit 11 deviates from the design value, the read data d representing the read result of the state of the quantum bit 11 may be supplied to the computer 500, and the computer 500 is enabled to obtain the read data d from the digital circuit 60.

The adjustment circuit 40 may adjust the use frequency f₀ such that the SNR of the microwaves M looped back before being input to the cooler 10 satisfies a predetermined reference value. As a result. the harmonics (e.g., harmonics generated in the microwaves M by operation of software, etc.) obtained by multiplying a frequency not intended by a designer may be reduced.

Next, a specific exemplary configuration of the information processing system will be described.

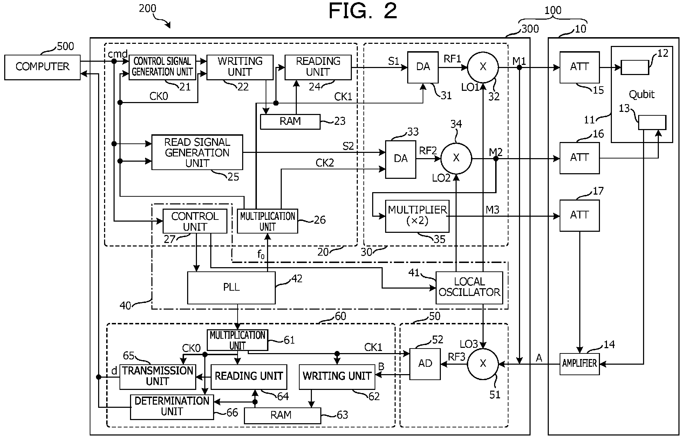

FIG. 2 is a diagram illustrating a specific exemplary configuration of the information processing system including the information processing apparatus according to the embodiment illustrated in FIG. 1. The information processing apparatus 100 includes the cooler 10 and a control device 300. The control device 300 is a device that controls the cooler 10 in accordance with the command cmd input from the computer 500. The control device 300 includes the digital circuit 20, the conversion circuit 30, the adjustment circuit 40, the conversion circuit 50, and the digital circuit 60.

The control device 300 generates a plurality of microwaves M1, M2, and M3 having different frequencies in accordance with the command cmd input from the computer 500, and transmits them to the cooler 10. The microwave M1 is a control signal to be used to control the state of the quantum bit 11. The microwave M2 is a read signal to be used to read the state of the quantum bit 11. The microwave M3 is a pump signal to be used for an amplifier 14 that parametrically amplifies a signal representing the read result of the state of the quantum bit 11.

The cooler 10 cools the quantum bit 11. The cooler 10 includes, for example, the quantum bit 11, attenuators (ATTs) 15, 16, and 17, and the amplifier 14. The quantum bit 11 includes a resonator 12 to be used to control the state of the quantum bit 11, and a resonator 13 to be used to read the state of the quantum bit 11. The attenuators 15, 16, and 17 attenuate the corresponding microwaves M1, M2, and M3, respectively. The amplifier 14 is a parametric amplifier that parametrically amplifies the signals representing the state of the quantum bit 11 read by the resonator 13.

The digital circuit 20 generates the digital signals S in accordance with the command cmd input from the computer 500. The digital circuit 20 includes, for example, a control signal generation unit 21. a writing unit 22, a random access memory (RAM) 23, a reading unit 24, a read signal generation unit 25, a multiplication unit 26, and a control unit 27. The digital circuit 20 is implemented by, for example, a field programmable gate array (FPGA), an application specific integrated circuit (ASIC), a microcomputer, or the like.

The control signal generation unit 21 generates a control signal for controlling the state of the quantum bit 11 in accordance with the command cmd input from the computer 500. The writing unit 22 temporarily stores the control signal generated by the control signal generation unit 21 in the RAM 23. The reading unit 24 reads the control signal from the RAM 23, and outputs the read control signal as a digital signal S1.

The read signal generation unit 25 generates a read signal for reading the state of the quantum bit 11 in accordance with the command cmd input from the computer 500. The read signal generation unit 25 outputs the generated read signal as a digital signal S2.

The control unit 27 controls frequency adjustment of a phase locked loop (PLL 42) in accordance with the command cmd input from the computer 500. The PLL 42 outputs the use frequency f₀ in accordance with the command cmd, and adjusts the use frequency f₀ to the frequency specified by the command cmd. The multiplication unit 26 generates clock signals CK0, CK1, and CK2 having frequencies obtained by multiplying the use frequency f₀. The frequencies of the clock signals CK0, CK1, and CK2 are different from each other.

The control signal generation unit 21 and the writing unit 22 operate according to the clock signal CK0 used in an interface with the computer 500. The reading unit 24 and a DA converter 31 operate according to the clock signal CK1 for DA conversion. A DA converter 33 operates according to the clock signal CK2 for DA conversion.

The conversion circuit 30 includes the DA converter 31, a mixer 32, the DA converter 33, a mixer 34, and a multiplier 35.

The DA converter 31 is a circuit that converts the digital signal S1 into an analog signal RF1. The analog signal RF1 is a radio frequency (RF) signal. A frequency of the analog signal RF1 changes as the use frequency f₀ changes. The mixer 32 up-converts the analog signal RF1 into the microwave M1 by multiplying the analog signal RF1 by a local oscillation signal LO1. The local oscillation signal LO1 has a frequency higher than that of the analog signal RF1.

The DA converter 33 is a circuit that converts the digital signal S2 into an analog signal RF2. The analog signal RF2 is an RF signal. A frequency of the analog signal RF2 changes as the use frequency f₀ changes. The mixer 34 up-converts the analog signal RF2 into the microwave M2 by multiplying the analog signal RF2 by a local oscillation signal LO2. The local oscillation signal LO2 has a frequency higher than that of the analog signal RF2. The multiplier 35 generates the microwave M3 having a frequency twice the frequency of the microwave M2.

The adjustment circuit 40 adjusts the use frequency f₀ such that the multiplication of the frequency of the analog signal RF1 differs from a predetermined frequency F1 (in this example, the resonance frequency of the resonator 12 used to control the state of the quantum bit 11). As a result, noise of a harmonic component that affects resonance of the resonator 12 may be reduced. Furthermore, the adjustment circuit 40 adjusts the use frequency f₀ such that the multiplication of the frequency of the analog signal RF2 differs from a predetermined frequency F2 (in this example, the resonance frequency of the resonator 13 used to read the state of the quantum bit 11). As a result, noise of a harmonic component that affects resonance of the resonator 13 may be reduced.

The adjustment circuit 40 may include a local oscillator 41 that adjusts the frequency of the local oscillation signal LO1 input to the mixer 32 so that the frequency of the microwave M1 matches the predetermined frequency F1 (in this example, the resonance frequency of the resonator 12 used to control the state of the quantum bit 11). As a result, it becomes possible to achieve both reduction of the noise of the harmonic component that affects the resonance of the resonator 12 and control of the frequency of the microwave M1 to the frequency at which the resonator 12 resonates.

The adjustment circuit 40 may include the local oscillator 41 that adjusts the frequency of the local oscillation signal LO2 input to the mixer 34 so that the frequency of the microwave M2 matches the predetermined frequency F2 (in this example, the resonance frequency of the resonator 13 used to read the state of the quantum bit 11). As a result, it becomes possible to achieve both reduction of the noise of the harmonic component that affects the resonance of the resonator 13 and control of the frequency of the microwave M2 to the frequency at which the resonator 13 resonates.

The adjustment circuit 40 may include the local oscillator 41 that adjusts the frequency of the local oscillation signal LO2 input to the mixer 34 so that the frequency of the microwave M3 matches a predetermined frequency F3 (in this example, the frequency twice the resonance frequency of the resonator 13). As a result, it becomes possible to achieve both reduction of the noise of the harmonic component that affects the parametric amplification of the amplifier 14 and control of the frequency of the microwave M3 to the frequency at which the amplifier 14 parametrically oscillates.

In this example, the adjustment circuit 40 includes the control unit 27, the local oscillator 41, and the PLL 42. The local oscillator 41 is an example of a first adjustment circuit that adjusts the frequencies of the microwaves, and in this example, it adjusts the frequencies of the microwaves M1, M2, and M3 according to a first frequency adjustment signal output from the control unit 27. The PLL 42 is an example of a second adjustment circuit that adjusts the use frequency f₀, and in this example, it adjusts the use frequency f₀ according to a second frequency adjustment signal output from the control unit 27. The adjustment circuit 40 performs adjustment such that the multiplication of the use frequency f₀ differs from the frequencies of the microwaves M1, M2, and M3 using at least one of the local oscillator 41 or the PLL 42. As a result, the noise of the harmonic component that affects the control and reading of the quantum bit 11 may be reduced.

In this example, the local oscillator 41 adjusts the frequencies of the microwaves M1, M2, and M3 to the respective predetermined frequencies F1, F2, and F3 corresponding thereto according to the first frequency adjustment signal output from the control unit 27. Meanwhile, the PLL 42 adjusts the use frequency f₀ such that the multiplication of the use frequency f₀ differs from the predetermined frequencies F1, F2, and F3 according to the second frequency adjustment signal output from the control unit 27. As a result, it becomes possible to achieve both reduction of the noise of the harmonic component that affects the control and reading of the state of the quantum bit 11 and control of the frequencies of the individual microwaves to the individual predetermined frequencies.

For example, a case will be considered where the multiplication unit 26 multiplies the use frequency f₀ of 500 MHz by a factor of four and the DA converter 31 generates the analog signal RF1 of 2 GHz. When the PLL 42 changes the use frequency f₀ to 490 MHz, the frequency of the analog signal RF1 decreases to 1.96 GHz (= 490 MHz × 4). The local oscillator 41 compensates for this difference in the frequency with the local oscillation signal LO1 in the microwave frequency band. Specifically, it is assumed that the frequency of the microwave M1 is adjusted to 10 GHz by the analog signal RF1 of 2 GHz and the local oscillation signal LO1 of 8 GHz. The PLL 42 changes the use frequency f₀ to 490 MHz, and the local oscillator 41 changes the frequency of the local oscillation signal LO1 to 8.04 GHz. As a result, the frequency of the microwave M1 is maintained at 10 GHz by the analog signal RF1 of 1.96 GHz and the local oscillation signal LO1 of 8.04 GHz. The other microwaves M2 and M3 are treated in a similar manner.

The conversion circuit 50 converts an analog output signal A output from the cooler 10 into a digital output signal B. The conversion circuit 50 includes a mixer 51 and an analog-to-digital (AD) converter 52.

The mixer 51 down-converts the analog output signal A into an analog signal RF3 by multiplying the analog output signal A output from the amplifier 14 by a local oscillation signal LO3. The local oscillation signal LO3 has a frequency lower than that of the analog output signal A. The analog signal RF3 is an RF signal. The AD converter 52 is a circuit that converts the analog signal RF3 into a digital signal B.

The digital circuit 60 generates read data d from the digital signal B in accordance with the command cmd input from the computer 500. The digital circuit 60 includes, for example, a writing unit 62, a RAM 63, a reading unit 64, a transmission unit 65, a multiplication unit 61, and a determination unit 66. The digital circuit 60 is implemented by, for example, an FPGA, an ASIC, a microcomputer, or the like.

The writing unit 62 temporarily stores the digital signal B in the RAM 63. The reading unit 64 reads the digital signal B from the RAM 63, and converts the read digital signal B into the read data d. The transmission unit 65 transmits the read data d to the computer 500. The determination unit 66 determines whether or not the SNR of the microwave M1 (which may be the microwave M2 or the microwave M3) looped back before being input to the cooler 10 satisfies a predetermined reference value, and outputs the read data d including a result of the determination to the computer 500. The multiplication unit 61 generates the clock signals CK0 and CK1 having frequencies obtained by multiplying the use frequency f₀. The frequencies of the clock signals CK0 and CK1 are different from each other.

The writing unit 62 and the AD converter 52 operate according to the clock signal CK1 for AD conversion. The determination unit 66, the transmission unit 65, and the reading unit 64 operate according to the clock signal CK0 used in the interface with the computer 500.

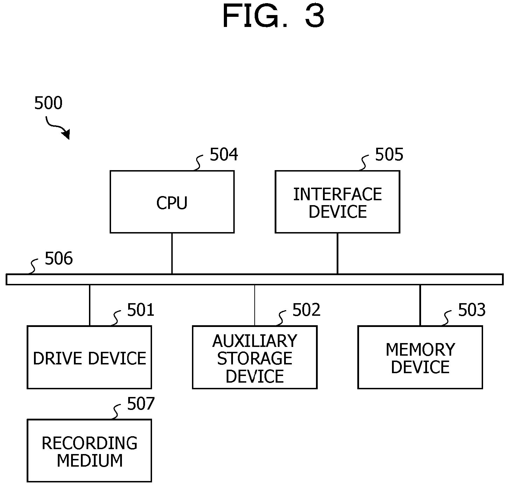

FIG. 3 is a hardware configuration diagram of the computer. The computer 500 illustrated in FIG. 3 includes a drive device 501, an auxiliary storage device 502, a memory device 503, a central processing unit (CPU) 504, and interface device 505, and the like, which are mutually coupled to each other by a bus 506.

A program that implements processing in the computer 500 is provided by a recording medium 507. When the recording medium 507 recording the program is set in the drive device 501, the program is installed in the auxiliary storage device 502 from the recording medium 507 via the drive device 501. However, the program is not necessarily installed from the recording medium 507, and may be downloaded from another computer via a network. The auxiliary storage device 502 stores the installed program, and also stores files, data, and the like that are needed.

The memory device 503 reads the program from the auxiliary storage device 502 and stores it when an instruction to start the program is issued. The CPU 504 is a processor that implements functions related to the computer 500 in accordance with the program stored in the memory device 503. The interface device 505 is used as an interface for coupling to the outside.

Note that examples of the recording medium 507 include a portable recording medium such as a compact disc read only memory (CD-ROM), a digital versatile disc (DVD), a universal serial bus (USB) memory, or the like. Furthermore, examples of the auxiliary storage device 502 include a hard disk drive (HDD), a flash memory, and the like. Both the recording medium 507 and the auxiliary storage device 502 correspond to a computer-readable recording medium.

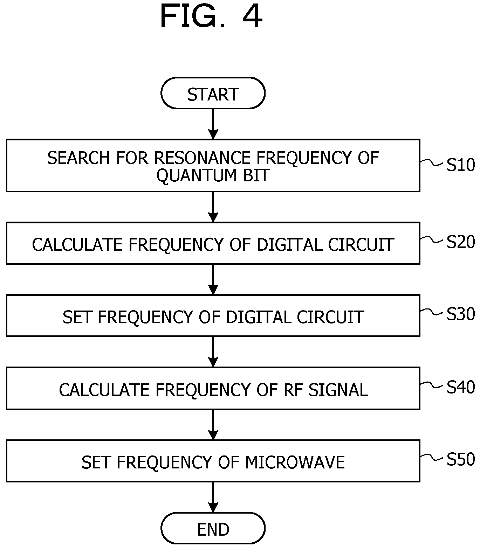

FIG. 4 is a flowchart illustrating a first example of a frequency adjustment method. The frequency adjustment method illustrated in FIG. 4 is implemented by the control device 300 operating in accordance with the command cmd from the computer 500. A frequency adjustment program for causing the computer 500 to execute each processing illustrated in FIG. 4 is stored in the auxiliary storage device 502 described above.

In step S10, the computer 500 outputs a command cmd (search command) for searching for the resonance frequency of the quantum bit 11. The adjustment circuit 40 sweeps the use frequency f₀ from the design value in accordance with the search command. As a result, the frequency of the microwave M1 transmitted from the conversion circuit 30 sweeps from the design value. The computer 500 refers to the read data d generated by the conversion circuit 50 and the digital circuit 60 based on the output signal A transmitted from the cooler 10, and searches for a frequency reactive to the read data d. A search result of the frequency having a reaction is stored in a storage device of the computer 500 as a predetermined frequency F1. Likewise, the computer 500 sweeps the frequencies of the microwaves M2 and M3, searches for frequencies reactive to the read data d, and stores, in the storage device, a search result of the frequencies having a reaction as predetermined frequencies F2 and F3.

In step S20, the computer 500 calculates the use frequency f₀ in the digital circuit 20. The computer 500 determines whether or not the multiplication of the use frequency f₀ matches the predetermined frequencies F1, F2, and F3. If the multiplication of the use frequency f₀ does not match the predetermined frequencies F1, F2, and F3, the computer 500 outputs a command cmd (first setting command) for setting the use frequency f₀. On the other hand, if the multiplication of the use frequency f₀ matches the predetermined frequencies F1, F2, and F3, the computer 500 outputs a command cmd (first setting command) for changing the use frequency f₀ in units of, for example, 0.1 MHz.

In step S30, the control unit 27 of the adjustment circuit 40 sets the use frequency f₀ generated by the PLL 42 to the frequency specified by the first setting command.

In step S40, the computer 500 calculates frequencies of the analog signals RF1 and RF2 that change according to the use frequency f₀ set in step S30.

In step S50, the computer 500 sets the frequencies of the microwaves M1, M2, and M3. The computer 500 outputs a command cmd (second setting command) for setting the frequency of the local oscillation signal LO1 such that the frequency of the microwave M1 matches the predetermined frequency F1 by the analog signal RF1 calculated in step S40. The control unit 27 of the adjustment circuit 40 sets the frequency of the local oscillation signal LO1 to the frequency specified by the second setting command. Likewise, the computer 500 outputs a command cmd (second setting command) for setting the frequency of the local oscillation signal LO2 such that the frequency of the microwave M2 matches the predetermined frequency F2 by the analog signal RF2 calculated in step S40. The control unit 27 of the adjustment circuit 40 sets the frequency of the local oscillation signal LO2 to the frequency specified by the second setting command.

As described above, since the information processing apparatus 100 according to the present embodiment has the two frequency variable functions of the PLL 42 and the local oscillator 41, a degree of freedom regarding the setting range of the frequencies of the microwaves increases as compared with a form including only one frequency variable function. As a result, it is easy to achieve both reduction of the noise of the harmonic component that affects the control and reading of the state of the quantum bit 11 and control of the frequencies of the individual microwaves to the individual predetermined frequencies.

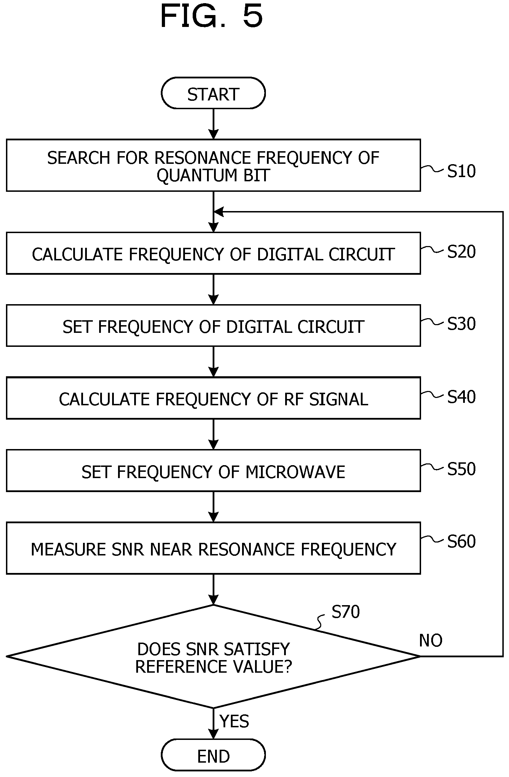

FIG. 5 is a flowchart illustrating a second example of the frequency adjustment method. The frequency adjustment method illustrated in FIG. 5 is implemented by the control device 300 operating in accordance with the command cmd from the computer 500. The frequency adjustment program for causing the computer 500 to execute each processing illustrated in FIG. 5 is stored in the auxiliary storage device 502 described above. Since descriptions of steps S10, S20, S30, S40, and S50 are similar to those of FIG. 4, they will be omitted.

In step S60, the computer 500 obtains, from the read data d, a measurement result of the SNR of the resonance frequency of the quantum bit 11 by the determination unit 66. As a result, the computer 500 is enabled to grasp the harmonics (e.g., harmonics generated in the microwave M1 or the like by operation of software, etc.) obtained by multiplying a frequency not intended by the designer.

In step S70, the computer 500 determines whether or not the SNR satisfies a predetermined reference value. If the SNR does not satisfy the predetermined reference value, the computer 500 returns to the processing of step S20. In step S20, the computer 500 recalculates the use frequency f₀ in the digital circuit 20 such that the multiplication of the use frequency f₀ is not a frequency that matches the predetermined frequencies F1, F2, and F3. As a result, the harmonics (e.g., harmonics generated in the microwave M1 or the like by operation of software, etc.) obtained by multiplying a frequency not intended by the designer may be reduced.

For example, in a case where a width of the resonance frequency of the quantum bit 11 is set to a and harmonic noise exists within a range of ±a/2 from the center of a, the computer 500 changes the use frequency f₀ such that the resonance frequency of the quantum bit 11 changes in units of a/2.

### CITATION LIST

### PATENT DOCUMENT

Patent Document 1: Japanese Laid-open Patent Publication No. 2007-49009

### REFERENCE SIGNS LIST

- 10: Cooler
- 11: Quantum bit
- 12, 13: Resonator
- 14: Amplifier
- 15, 16, 17: Attenuator
- 20: Digital circuit
- 30: Conversion circuit
- 40: Adjustment circuit
- 50: Conversion circuit
- 60: Digital circuit
- 100: Information processing apparatus
- 200: Information processing system
- 300: Control device
- 500: Computer
- A: Output signal
- B: Digital signal
- M: Microwave
- S: Digital signal

## Claims

1. An information processing apparatus (100) comprising:
a quantum bit (11);
a digital circuit (20) configured to generate a digital signal; and
a conversion circuit (30) configured to convert the digital signal into a microwave to be transmitted to the quantum bit (11),
**characterized in that** the information processing apparatus (100) further comprises an adjustment circuit (40) configured to set a first frequency of a clock used in the digital circuit (20) such that a harmonic frequency of the first frequency differs from a second frequency of the microwave, wherein the second frequency is a resonance frequency of the quantum bit (11).

2. The information processing apparatus (100) according to claim 1, wherein the adjustment circuit (40) is configured to set the second frequency to the resonance frequency of the quantum bit (11), and set the first frequency such that an integral multiple of the first frequency differs from the resonance frequency of the quantum bit (11).

3. The information processing apparatus (100) according to claim 2, wherein
the conversion circuit (30) includes: a converter configured to convert the digital signal into an analog signal, and a mixer configured to up-convert the analog signal into the microwave,
the second frequency is configured to change with a change of the first frequency, and
the adjustment circuit (40) is configured to adjust the first frequency such that the integral multiple of the first frequency differs from the resonance frequency of the quantum bit (11),
and optionally wherein the adjustment circuit (40) is configured to adjust a frequency of a local oscillation signal to be input to the mixer such that the second frequency matches the resonance frequency of the quantum bit (11).

4. The information processing apparatus (100) according to claim 1, wherein
the adjustment circuit (40) includes:
a first adjustment circuit configured to adjust the second frequency; and
a second adjustment circuit configured to adjust the first frequency, and
the adjustment circuit (40) is configured to perform adjustment such that an integral multiple of the first frequency differs from the second frequency by using at least one of the first adjustment circuit or the second adjustment circuit.

5. The information processing apparatus (100) according to claim 4, wherein
the first adjustment circuit is configured to adjust the second frequency to the resonance frequency of the quantum bit (11). and
the second adjustment circuit is configured to adjust the first frequency such that the integral multiple of the first frequency differs from the resonance frequency of the quantum bit (11).

6. The information processing apparatus (100) according to any one of claims 1 to 5, wherein the adjustment circuit (40) is configured to adjust the first frequency such that a signal-to-noise ratio, SNR, of the microwave that has been looped back satisfies a reference value.

7. The information processing apparatus (100) according to any of the preceding claims, wherein the adjustment circuit (40) is configured to adjust the second frequency to the resonance frequency such that a state of the quantum bit (11) is read from an output signal from the quantum bit (11) or from an output signal from a cooler that cools the quantum bit (11),
and optionally wherein the adjustment circuit (40) is configured to observe the output signal for each activation, and adjust the second frequency to the resonance frequency for each activation such that the state of the quantum bit (11) is read from the output signal.

8. The information processing apparatus (100) according to any of the preceding claims, wherein the resonance frequency includes a resonance frequency of a resonator to be used to control a state of the quantum bit (11).

9. The information processing apparatus (100) according to any of claims 1 to 7, wherein the resonance frequency includes a resonance frequency of a resonator to be used to read a state of the quantum bit (11).

10. The information processing apparatus (100) according to any one of claims 1 to 8, wherein the microwave includes a signal to be used to control a state of the quantum bit (11).

11. The information processing apparatus (100) according to any one of claims 1 to 7 and 9, wherein the microwave includes a signal to be used to read a state of the quantum bit (11).

12. The information processing apparatus (100) according to any one of claims 1 to 6, wherein the microwave includes a pump signal to be used for an amplifier configured to parametrically amplify a signal that represents a read result of a state of the quantum bit (11).

13. A frequency adjustment method comprising:
generating a digital signal with a digital circuit; and
converting the digital signal into a microwave to be transmitted to a quantum bit with a conversion circuit,
**characterized in that** the frequency adjustment method further comprises adjusting, with an adjustment circuit, a first frequency such that an integral multiple of the first frequency of a clock used in the digital circuit differs from a second frequency of the microwave, wherein the second frequency is a resonance frequency of the quantum bit.

14. A frequency adjustment program for causing a computer to perform processing comprising:
generating a digital signal with a digital circuit; and
converting the digital signal into a microwave to be transmitted to a quantum bit with a conversion circuit,
**characterized in that** the processing further comprises adjusting, with an adjustment circuit, a first frequency such that an integral multiple of the first frequency of a clock used in the digital circuit differs from a second frequency of the microwave, wherein the second frequency is a resonance frequency of the quantum bit.

## Patentansprüche

1. Informationsverarbeitungsvorrichtung (100), umfassend:
ein Quantenbit (11);
eine digitale Schaltung (20), die dazu konfiguriert ist, ein digitales Signal zu erzeugen; und
eine Umwandlungsschaltung (30), die dazu konfiguriert ist, das digitale Signal in eine Mikrowelle umzuwandeln, die an das Quantenbit (11) übertragen werden soll,
**dadurch gekennzeichnet, dass** die Informationsverarbeitungsvorrichtung (100) ferner eine Anpassungsschaltung (40) umfasst, die dazu konfiguriert ist,
eine erste Frequenz eines Taktgebers, der in der digitalen Schaltung (20) verwendet wird, derart einzustellen, dass sich eine Oberschwingungsfrequenz der ersten Frequenz von einer zweiten Frequenz der Mikrowelle unterscheidet, wobei die zweite Frequenz eine Resonanzfrequenz des Quantenbits (11) ist.

2. Informationsverarbeitungsvorrichtung (100) nach Anspruch 1, wobei die Anpassungsschaltung (40) dazu konfiguriert ist, die zweite Frequenz auf die Resonanzfrequenz des Quantenbits (11) einzustellen und die erste Frequenz derart einzustellen, dass sich ein ganzzahliges Vielfaches der ersten Frequenz von der Resonanzfrequenz des Quantenbits (11) unterscheidet.

3. Informationsverarbeitungsvorrichtung (100) nach Anspruch 2, wobei
die Umwandlungsschaltung (30) Folgendes beinhaltet: einen Wandler, der dazu konfiguriert ist, das digitale Signal in ein analoges Signal umzuwandeln, und einen Mischer, der dazu konfiguriert ist, das analoge Signal auf die Mikrowelle hochzumischen,
die zweite Frequenz dazu konfiguriert ist, sich mit einer Änderung der ersten Frequenz zu ändern, und
die Anpassungsschaltung (40) dazu konfiguriert ist, die erste Frequenz derart anzupassen, dass sich das ganzzahlige Vielfache der ersten Frequenz von der Resonanzfrequenz des Quantenbits (11) unterscheidet,
und wobei die Anpassungsschaltung (40) gegebenenfalls dazu konfiguriert ist, eine Frequenz eines Überlagerungsschwingungssignals, das in den Mischer eingegeben werden soll, derart anzupassen, dass die zweite Frequenz mit der Resonanzfrequenz des Quantenbits (11) übereinstimmt.

4. Informationsverarbeitungsvorrichtung (100) nach Anspruch 1, wobei die Anpassungsschaltung (40) Folgendes beinhaltet:
eine erste Anpassungsschaltung, die dazu konfiguriert ist, die zweite Frequenz anzupassen; und
eine zweite Anpassungsschaltung, die dazu konfiguriert ist, die erste Frequenz anzupassen; und
die Anpassungsschaltung (40) dazu konfiguriert, Anpassung derart durchzuführen, dass sich ein ganzzahliges Vielfaches der ersten Frequenz von der zweiten Frequenz unterscheidet, indem mindestens eine von der ersten Anpassungsschaltung oder der zweiten Anpassungsschaltung verwendet wird.

5. Informationsverarbeitungsvorrichtung (100) nach Anspruch 4, wobei
die erste Anpassungsschaltung dazu konfiguriert ist, die zweite Frequenz an die Resonanzfrequenz des Quantenbits (11) anzupassen, und
die zweite Anpassungsschaltung dazu konfiguriert ist, die erste Frequenz derart anzupassen, dass sich das ganzzahlige Vielfache der ersten Frequenz von der Resonanzfrequenz des Quantenbits (11) unterscheidet.

6. Informationsverarbeitungsvorrichtung (100) nach einem der Ansprüche 1 bis 5, wobei die Anpassungsschaltung (40) dazu konfiguriert ist, die erste Frequenz derart anzupassen, dass das Signal-Rausch-Verhältnis, SNR, der zurückgeführten Mikrowelle einen Referenzwert erfüllt.

7. Informationsverarbeitungsvorrichtung (100) nach einem der vorhergehenden Ansprüche, wobei die Anpassungsschaltung (40) dazu konfiguriert ist, die zweite Frequenz derart an die Resonanzfrequenz anzupassen, dass ein Zustand des Quantenbits (11) aus einem Ausgangssignal von dem Quantenbit (11) oder aus einem Ausgangssignal von einem das Quantenbit (11) kühlenden Kühler ausgelesen wird,
wobei die Anpassungsschaltung (40) gegebenenfalls dazu konfiguriert ist, das Ausgangssignal für jede Aktivierung zu beobachten, und die zweite Frequenz für jede Aktivierung derart an die Resonanzfrequenz anzupassen, dass der Zustand des Quantenbits (11) aus dem Ausgangssignal ausgelesen wird.

8. Informationsverarbeitungsvorrichtung (100) nach einem der vorhergehenden Ansprüche, wobei die Resonanzfrequenz eine Resonanzfrequenz eines Resonators beinhaltet, der verwendet werden soll, um einen Zustand des Quantenbits (11) zu steuern.

9. Informationsverarbeitungsvorrichtung (100) nach einem der Ansprüche 1 bis 7, wobei die Resonanzfrequenz eine Resonanzfrequenz eines Resonators beinhaltet, der verwendet werden soll, um einen Zustand des Quantenbits (11) auszulesen.

10. Informationsverarbeitungsvorrichtung (100) nach einem der Ansprüche 1 bis 8, wobei die Mikrowelle ein Signal beinhaltet, das verwendet werden soll, um einen Zustand des Quantenbits (11) zu steuern.

11. Informationsverarbeitungsvorrichtung (100) nach einem der Ansprüche 1 bis 7 und 9, wobei die Mikrowelle ein Signal beinhaltet, das verwendet werden soll, um einen Zustand des Quantenbits (11) auszulesen.

12. Informationsverarbeitungsvorrichtung (100) nach einem der Ansprüche 1 bis 6, wobei die Mikrowelle ein Pumpsignal beinhaltet, das für einen Verstärker verwendet werden soll, der dazu konfiguriert ist, ein Signal, das ein Leseergebnis eines Zustands des Quantenbits (11) darstellt, parametrisch zu verstärken.

13. Frequenzanpassungsverfahren, umfassend:
Erzeugen eines digitalen Signals mit einer digitalen Schaltung; und
Umwandeln des digitalen Signals mit einer Umwandlungsschaltung in eine Mikrowelle, die an das Quantenbit übertragen werden soll,
**dadurch gekennzeichnet, dass** das Frequenzanpassungsverfahren ferner derartiges Anpassen einer ersten Frequenz mit einer Anpassungsschaltung umfasst, dass sich ein ganzzahliges Vielfaches der ersten Frequenz eines Taktgebers, der in der digitalen Schaltung verwendet wird, von einer zweiten Frequenz der Mikrowelle unterscheidet, wobei die zweite Frequenz eine Resonanzfrequenz des Quantenbits ist.

14. Frequenzanpassungsprogramm zum Veranlassen eines Computers, Verarbeitung durchzuführen, die Folgendes umfasst:
Erzeugen eines digitalen Signals mit einer digitalen Schaltung; und
Umwandeln des digitalen Signals mit einer Umwandlungsschaltung in eine Mikrowelle, die an das Quantenbit übertragen werden soll,
**dadurch gekennzeichnet, dass** die Verarbeitung ferner derartiges Anpassen einer ersten Frequenz mit einer Anpassungsschaltung umfasst, dass sich ein ganzzahliges Vielfaches der ersten Frequenz eines Taktgebers, der in der digitalen Schaltung verwendet wird, von einem zweiten Frequenz der Mikrowelle unterscheidet, wobei die zweite Frequenz eine Resonanzfrequenz des Quantenbits ist.

## Revendications

1. Appareil de traitement d'informations (100) comprenant :
un bit quantique (11) ;
un circuit numérique (20) configuré pour générer un signal numérique ; et
un circuit de conversion (30) configuré pour convertir le signal numérique en une micro-onde à transmettre au bit quantique (11), **caractérisé en ce que** l'appareil de traitement d'informations (100) comprend également un circuit de réglage (40) configuré pour régler une première fréquence d'une horloge utilisée dans le circuit numérique (20) de telle sorte qu'une fréquence harmonique de la première fréquence diffère d'une seconde fréquence de la micro-onde, dans lequel la seconde fréquence est une fréquence de résonance du bit quantique (11).

2. Appareil de traitement d'informations (100) selon la revendication 1, dans lequel le circuit de réglage (40) est configuré pour définir la seconde fréquence sur la fréquence de résonance du bit quantique (11), et pour définir la première fréquence de telle sorte qu'un multiple entier de la première fréquence diffère de la fréquence de résonance du bit quantique (11) .

3. Appareil de traitement d'informations (100) selon la revendication 2, dans lequel le circuit de conversion (30) comporte : un convertisseur configuré pour convertir le signal numérique en un signal analogique, et un mélangeur configuré pour convertir en élévation le signal analogique en micro-onde, la seconde fréquence est configurée pour changer en fonction d'un changement de la première fréquence, et
le circuit de réglage (40) est configuré pour régler la première fréquence de telle sorte que le multiple entier de la première fréquence diffère de la fréquence de résonance du bit quantique (11),
et, éventuellement dans lequel le circuit de réglage (40) est configuré pour régler la fréquence d'un signal d'oscillation local à entrer dans le mélangeur de telle sorte que la seconde fréquence corresponde à la fréquence de résonance du bit quantique (11).

4. Appareil de traitement d'informations (100) selon la revendication 1, dans lequel :
le circuit de réglage (40) comporte :
un premier circuit de réglage configuré pour régler la seconde fréquence ; et
un second circuit de réglage configuré pour régler la première fréquence, et
le circuit de réglage (40) est configuré pour réaliser un réglage de telle sorte qu'un multiple entier de la première fréquence diffère de la seconde fréquence à l'aide d'au moins l'un du premier circuit de réglage, ou du second circuit de réglage.

5. Appareil de traitement d'informations (100) selon la revendication 4, dans lequel
le premier circuit de réglage est configuré pour régler la seconde fréquence à la fréquence de résonance du bit quantique (11), et
le second circuit de réglage est configuré pour régler la première fréquence de telle sorte que le multiple entier de la première fréquence diffère de la fréquence de résonance du bit quantique (11).

6. Appareil de traitement d'informations (100) selon l'une quelconque des revendications 1 à 5, dans lequel le circuit de réglage (40) est configuré pour régler la première fréquence de telle sorte qu'un rapport signal/bruit, SNR, de la micro-onde qui a été bouclée satisfait une valeur de référence.

7. Appareil de traitement d'informations (100) selon l'une quelconque des revendications précédentes, dans lequel le circuit de réglage (40) est configuré pour régler la seconde fréquence sur la fréquence de résonance de telle sorte qu'un état du bit quantique (11) est lu à partir d'un signal de sortie du bit quantique (11) ou à partir d'un signal de sortie d'un refroidisseur qui refroidit le bit quantique (11),
et, éventuellement dans lequel le circuit de réglage (40) est configuré pour observer le signal de sortie pour chaque activation, et régler la seconde fréquence sur la fréquence de résonance pour chaque activation de telle que l'état du bit quantique (11) est lu à partir du signal de sortie.

8. Appareil de traitement d'informations (100) selon l'une quelconque des revendications précédentes, dans lequel la fréquence de résonance comporte une fréquence de résonance d'un résonateur à utiliser pour commander un état du bit quantique (11) .

9. Appareil de traitement d'informations (100) selon l'une quelconque des revendications 1 à 7, dans lequel la fréquence de résonance comporte une fréquence de résonance d'un résonateur à utiliser pour lire un état du bit quantique (11).

10. Appareil de traitement d'informations (100) selon l'une quelconque des revendications 1 à 8, dans lequel la micro-onde comporte un signal destiné à être utilisé pour commander un état du bit quantique (11).

11. Appareil de traitement d'informations (100) selon l'une quelconque des revendications 1 à 7 et 9, dans lequel la fréquence de résonance comporte une fréquence de résonance d'un résonateur à utiliser pour lire un état du bit quantique (11).

12. Appareil de traitement d'informations (100) selon l'une quelconque des revendications 1 à 6, dans lequel la micro-onde comporte un signal de pompe destiné à être utilisé pour un amplificateur configuré pour amplifier de manière paramétrique un signal qui représente un résultat de lecture d'un état du bit quantique (11).

13. Procédé de réglage de fréquence comprenant :
la génération d'un signal numérique à l'aide d'un circuit numérique ; et
la conversion du signal numérique en une micro-onde à transmettre au bit quantique avec un circuit de conversion,
**caractérisé en ce que** le procédé de réglage de fréquence comprend également le réglage, avec un circuit d'ajustement, d'une fréquence, de telle sorte qu'un multiple entier de la première fréquence d'une horloge utilisé dans le circuit numérique diffère d'une seconde fréquence de la micro-onde, dans lequel la seconde fréquence est une fréquence de résonance du bit quantique.

14. Programme de réglage de fréquence destiné à amener un ordinateur à réaliser un traitement comprenant :
la génération d'un signal numérique à l'aide d'un circuit numérique ; et
la conversion du signal numérique en une micro-onde à transmettre au bit quantique avec un circuit de conversion,
**caractérisé en ce que** le traitement comprend également le réglage, avec un circuit d'ajustement, d'une fréquence, de telle sorte qu'un multiple entier de la première fréquence d'une horloge utilisé dans le circuit numérique diffère d'une seconde fréquence de la micro-onde, dans lequel la seconde fréquence est une fréquence de résonance du bit quantique.
